**Europäisches Patentamt**

**European Patent Office**

**Office européen des brevets**

(11) Veröffentlichungsnummer: **0 072 770 B1**

# (12) EUROPÄISCHE PATENTSCHRIFT

(45) Veröffentlichungstag der Patentschrift:
13.11.85

(21) Anmeldenummer: **82710040.5**

(22) Anmeldetag: **11.08.82**

(51) Int. Cl.⁴: **G 01 M 9/00,** G 01 M 10/00, G 01 P 5/00, G 01 S 11/00 // G02F1/11

(54) **Verfahren und Vorrichtung zum Messen von Laufzeitdifferenzen von Ultraschallimpulsen zur Bestimmung von Strömungsfeldern.**

(30) Priorität: **18.08.81 DE 3132526**

(43) Veröffentlichungstag der Anmeldung:
**23.02.83 Patentblatt 83/8**

(45) Bekanntmachung des Hinweises auf die Patenterteilung:
**13.11.85 Patentblatt 85/46**

(84) Benannte Vertragsstaaten:
**CH FR GB LI NL SE**

(56) Entgegenhaltungen:
**CH - A - 516 800**
**DE - A - 3 103 357**
**DE - B - 3 017 997**
**GB - A - 1 411 165**
**GB - A - 1 590 764**
**US - A - 3 977 244**

(73) Patentinhaber: **Deutsche Forschungs- und Versuchsanstalt für Luft- und Raumfahrt e.V., Linder Höhe, D-5000 Köln 90 (DE)**

(72) Erfinder: **Engler, Rolf, Dipl.-Phys., Baumschulenweg 5, D-3400 Göttingen (DE)**
Erfinder: **Wulf, Rudolf, Dipl.-Ing., Rhumeweg 10a, D-3400 Göttingen (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

# 0 072 770

**Beschreibung**

Die Erfindung bezieht sich auf ein Verfahren zur Bestimmung von Kenngrößen eines Strömungsfeldes durch Messung der Laufzeit von Ultraschallimpulsen, insbes. zur Bestimmung von Geschwindigkeitskomponenten in strömenden gasförmigen Medien, bei dem mindestens ein Ultraschallimpuls durch das Strömungsfeld geschickt und die Laufzeit zu einem oder mehreren vorgegebenen Orten des Strömungsfeldes durch Detektieren der Ankunft des Impulses an dem oder den vorgegebenen Orten ermittelt wird. Die Erfindung betrifft gleichzeitig eine Vorrichtung zur Durchführung des Verfahrens, die es erlaubt, auch noch weitere Kenngrößen eines Strömungsfeldes neben Geschwindigkeitskomponenten, und zwar beispielsweise die Temperatur oder Wege, zu messen.

Es ist aus ICIASF RECORD, Sept. 1979, S. 163—170, bekannt, zur Bestimmung von Kenngrößen eines Strömungsfeldes durch Messung der Laufzeit von Ultraschallimpulsen Ultraschallwandler als Sender und auch als Empfänger bei Strömungsfelduntersuchungen in Windkanälen einzusetzen. Die Ultraschallwandler weisen ein relativ großes Gehäuse auf und erfordern umfangsreiche Halterungen und besondere Stromzuführungen. Die erhebliche räumliche Ausdehnung eines solchen Ultraschallwandlers und der zugehörigen Hilfseinrichtung führt im Windkanal häufig zu Störungen, die die Meßergebnisse unbrauchbar machen. Insbesondere in geschlossenen Kanälen erfolgt eine derart starke Veränderung des Strömungsquerschnittes durch die Anordnung der Meßeinrichtungen, die in vielen Fällen die Meßergebnisse unzumutbar verfälschen. Oft müssen auch zum Ausmessen eines Strömungsfeldes mehrere aufeinanderfolgende Messungen durchgeführt werden, zwischen denen der Ultraschallwandler verschoben werden muß.

Auf diese Weise lassen sich lediglich stationäre Strömungen oder solche instationäre Vorgänge untersuchen, bei denen dann mit Kenntnis des zu erwartenden zeitlichen Ablaufes des Strömungsvorgangs (z. B. in dem Spezialfall von Periodizität) der Meßvorgang zum jeweils richtigen Zeitpunkt ausgelöst werden kann. Dabei sind jedoch relativ lange Meßzeiten in Kauf zu nehmen. Die Anwendungsmöglichkeiten eines solchen Ultraschallwandlers sind stark auf Spezialfälle eingeschränkt. Da durch die Ultraschallwandler eine Ankopplung des Ultraschallimpulses an die Meßstrecke erfolgen muß, wird das Strömungsfeld am Anfang, also am Ankoppelpunkt und auch am Ende durch die Anwesenheit der Ultraschallwandler beeinträchtigt. Diese Beeinträchtigung verschwindet nur dann, wenn als Integrationsstrecke eine kleinere Entfernung als diejenige zwischen den beiden Ultraschallwandlern angesetzt werden kann, was in Spezialfällen durch entsprechende Annahmen realisiert werden kann.

In der DE-A-31 03 357 ist ein Ultraschallwandler gezeigt, bei welchem spezielle Empfangsmikrofone, die mit dem ankommenden Signal in Resonanz schwingen müssen, eingesetzt werden. Die Veränderung des Integrationsweges im Strömungsfeld erfordert einen erheblichen apparativen Aufwand und Umbau der Meßeinrichtung. In jedem Fall ist ein Empfangsmikrofon als Sonde im Strömungsfeld notwendig, welches im Spezialfall auch außerhalb des Meßbereiches angeordnet werden kann. Eine Temperaturmessung ist ohne Einbringung einer Sonde in den Meßbereich bzw. an den Meßpunkt nicht möglich.

Mit bekannten Laser-Meßverfahren (z. B. Laser-Doppler, Zwei-Fokus-Verfahren usw.) lassen sich keine Integrationswege aufbauen und keine instationären Messungen durchführen. Der Zeitaufwand zur Ausmessung eines Strömungsfeldes mit dem üblichen Laser-Meßverfahren ist erheblich größer als mit der Ultraschall-Methode.

Der Erfindung liegt die Aufgabe zugrunde, ein Verfahren und eine Vorrichtung aufzuzeigen, mit dem in dem interessierenden Meßbereich berührungslos (ohne störende Sonden) Laufzeiten von Ultraschallimpulsen gemessen werden können und der Meßbereich ohne Beeinflussung der Strömung wählbar ist.

Es sollen stationäre und instationäre Strömungsfelder derart vermessen werden, daß Wegintegrale von Strömungskomponenten, z. B. zur Bestimmung von Wirbelparametern, ermittelt werden können. Einerseits soll es möglich sein, über große Wege zu integrieren (z. B. bei der Erfassung von Wirbeln), andererseits soll es auch möglich sein, über kurze Wege zu integrieren, um mehr oder weniger punktförmig eine Bestimmung örtlicher Strömungskomponenten zu erreichen. Da bei Strömungsvorgängen in vielerlei Hinsicht die Temperatur von Bedeutung ist, insbesondere bei kompressiver Strömung, soll es auch möglich sein, diese Temperatur zu bestimmen. Die zum Verfahren notwendigen Vorrichtungen sollen ohne zu stören außerhalb des zu untersuchenden Strömungsfeldes angebracht werden können, und zwar auch in geschlossenen Windkanälen. Weiterhin soll es möglich sein, aus bzw. über große Entfernungen messen zu können. Durch einen schnellen sequentiellen oder gar parallelen Betrieb der Vorrichtung sollen sich außer stationären Strömungsprozessen auch instationäre erfassen lassen.

Erfindungsgemäß wird dies bei dem Verfahren der eingangs beschriebenen Art dadurch erreicht, daß zum Detektieren der Ankunft des Ultraschallimpulses an dem jeweils betrachteten Ort jeweils ein Laserstrahl derart durch das Strömungsfeld gerichtet wird, daß er den Weg des Ultraschallimpulses an dem betreffenden Ort unter einem Winkel zur Ausbreitungsrichtung des Ultraschallimpulses schneidet, und daß die beim Kreuzen des Laserstrahls durch den Ultraschallimpuls bewirkte Modulation des Laserstrahls erfaßt wird. Während bisher im Stand der Technik ein Ultraschallwandler als

2

Empfänger, also ein körperlicher konkreter Gegenstand eingesetzt wurde, der notwendigerweise das Strömungsfeld durch seine Anwesenheit berührte, wird jetzt als Empfänger für den Ultraschallimpuls ein Laserstrahl eingesetzt, der berührungslos im Meßpunkt bzw. im Meßbereich arbeitet und damit das Strömungsfeld in keiner Weise stört. Durch das Zusammentreffen eines Ultraschallimpulses und eines Laserstrahls im Kreuzungspunkt wird der Laserstrahl verändert bzw. mit dem Ultraschallimpuls moduliert. Laserstrahlen lassen sich bekanntlich auch über relativ große Entfernungen ohne weiteres transportieren, so daß die Modulation außerhalb des Strömungsfeldes registriert werden kann. Damit entsteht eine optischakustische Meßmethode, die die Untersuchung stationärer und instationärer Strömungsprozesse — auch mit gleichzeitiger Temperaturerfassung — im kleinsten Bereich von Strömungsfeldern und ohne Verschiebung der Meßanordnung ermöglicht. Es sind keine Mikrofone als Empfänger notwendig, da diese Funktion von dem Laserstrahl übernommen wird. Die entsprechenden Ultraschallsender können, ohne zu stören, relativ weit entfernt von dem zu vermessenden Strömungsfeld angeordnet werden. Durch die Möglichkeit, Ultraschallsignale sehr hoher Frequenz abzustrahlen, lassen sich mit Hilfe des das Ultraschallsignal kreuzenden Laserstrahles auch Abstands- oder Entfernungsmessungen durchführen, insbesondere als sogenannte Nullmessung bei ruhendem Strömungsmedium zum Ausmessen der geometrischen Gegebenheiten der Vorrichtung. Die Vorrichtung selbst erfordert somit keine Einhaltung präsizer Anordnungstoleranzen von Sendern und Empfängern zu einander.

Sowohl die Aussendung der Ultraschallimpulse als auch die Registrierung der Modulation kann zeilenweise durchgeführt werden, wobei 50 eine Vielzahl von vorgegebenen Orten als Kreuzungspunkte zwischen den Ultraschallimpulsen und den Laserstrahlen gebildet und die jeweiligen Informationen registriert werden. Der große Vorteil dieses Verfahrens liegt darin, daß beliebige Integrationswege — je nach der Entfernung der Laserstrahlen voneinander — aufgebaut bzw. ausgewählt werden können, und zwar ohne den apparativen Aufbau auch nur im geringsten zu ändern. Die Messungen können sehr viel schneller durchgeführt werden, als dies bisher möglich war. Während bisher mit herkömmlichen Verfahren (Laser-Doppler, Lochsonden, Hitzdraht u. a.) die Meßzeit beim Ausmessen eines Strömungsfeldes von z. B. 3 m × 3 m mit einem Meßpunktabstand von ca. 1 cm etwa einen Tag dauerte, läßt sich eine solche Messung nach dem neuen Verfahren in ca. 1 Minute oder noch schneller durchführen. Darüber hinaus können auch gezielt sehr enge Strömungsbereiche untersucht werden, und zwar ohne Einbringung jeglicher Sonden im Strömungsfeld.

Kurze Ultraschallimpulse von ca. 10 µsec bis 1 µsec können ausgesandt werden, die als Kompressions- oder Dichtewelle die Laserstrahlen durchlaufen, wodurch der Laserstrahl abgelenkt und der insoweit modulierte Laserstrahl aufgenommen wird. Dabei kann der modulierte Laserstrahl zunächst aus dem zu messenden Strömungsfeld herausgeführt und erst außerhalb des Strömungsfeldes registriert werden, so daß keine negative Beeinflussung des Strömungsfeldes stattfindet. Bei Verwendung mehrerer Laserstrahlen können ohne apparative Verschiebung oder sonstige Veränderung durch Auswahl betreffender Laserstrahlen beliebige, große oder kleine, Integrationswege geschaffen werden, so daß das Strömungsfeld selbst ohne Störeinfluß durch den Randbereich untersucht werden kann.

Zur örtlichen Temperaturermittlung können Ultraschallimpulse aus einander entgegensetzten Richtungen auf die gleichen Laserstrahlen geschickt werden. Es ist also auch eine örtliche berührungslose Temperaturmessung möglich. Dies wird dadurch erklärlich, daß Ultraschallimpulse sich bei unterschiedlichen Temperaturen im Strömungsfeld unterschiedlich schnell ausbreiten. Es läßt sich die Geschwindigkeit mit einer Zeilenordnung von Laserstrahlen mit den entsprechenden nachgeschalteten Teilen der Aufnahmeeinheit ermitteln und somit auch die sondenfreie Temperaturermittlung durchführen.

Die Vorrichtung zur Bestimmung von Kenngrößen eines Strömungsfeldes kennzeichnet sich erfindungsgemäß dadurch, daß als Empfänger ein einen Laserstrahl aussendender Laser und eine eine Modulation des Laserstrahls registrierende Aufnahmeeinheit vorgesehen sind, und daß der Empfänger und der Ultraschallsender so angeordnet sind, daß sich der Ultraschallimpuls und der Laserstrahl in einem vorgegebenen Ort kreuzen. Zwischen je zwei vorgegebenen Orten als Kreuzungspunkte ergibt sich die Meßstrecke bzw. der Meßpunkt bei kleinem Abstand zwischen zwei vorgegebenen Orten. Durch die Verwendung des Laserstrahls als wesentlicher Teil der Empfängereinheit wird die Berührungslosigkeit erreicht; die durch den Ultraschallimpuls erfolgte Modulation des Laserstrahls läßt sich über relativ weite Strecken mit Hilfe des Laserstrahls transportieren und dort außerhalb des Strömungsfeldes bzw. des Meßbereichs mit der Aufnahmeeinheit störungsfrei registrieren.

Zur Bestimmung eines Strömungsfeldes werden sowohl eine Vielzahl von Ultraschallsendern als auch eine Vielzahl von Empfängern, im wesentlichen bestehend aus Laserstrahlen und Aufnahmeeinheiten, zeilenweise winklig zueinander angeordnet, so daß eine große Anzahl von Kreuzungspunkten entsteht, die Meßpunkte darstellen. Zwischen beliebigen Punkten kann dann eine Integration erfolgen, die durch eine nachgeschaltete Auswerteeinheit mühelos erreichbar ist. Dabei muß die Vorrichtung in keiner Weise verändert werden, was auch den Vorteil mit sich bringt, daß z. B. bei Anwendung in einem Windkanal ein solcher einmal mit einer derartigen Vorrichtung ausgestattet werden kann. Die Vorrichtung läßt sich dann beim Untersuchen ganz verschiedener Körper oder Strömungsfelder ohne apparative Veränderung benutzen. Besonders vorteilhaft ist, daß dies auch in geschlossenen Windkanälen möglich ist.

Jede Aufnahmeeinheit kann im wesentlichen aus einer Schlieren-Empfangsoptik mit nachgeschaltetem Fototransistor oder auch aus einem Diodenarray bestehen. Es versteht sich, daß sich die Anzahl der Aufnahmeeinheiten nach der Anzahl der Laserstrahlen richtet. Jeder Laserstrahl kann durch einen separat angeordneten Laser erzeugt werden oder aber auch aus einem einzigen Laser abgeleitet werden, was beispielsweise durch Verwendung eines Drehspiegels mit einer Spiegelzeile oder dgl. möglich ist. Dem Fachmann stehen hier verschiedene Möglichkeiten offen. Bei Ausbildung der Aufnahmeeinheit als Schlieren-Empfangsoptik mit nachgeschaltetem Fototransistor wird das Hell-Dunkel-Verfahren bei der Registrierung der Modulation angewendet. Bei Verwendung eines Diodenarrays wird die Ablenkung des Laserstrahls durch die Verdichtungswelle des Ultraschallimpulses zur Bestimmung der genannten Strömungsgrößen benutzt.

Zur Bestimmung von Geschwindigkeitskomponenten in den drei Raumrichtungen werden Sender und Empfänger jeweils in zwei Ebenen zueinander angeordnet.

Als mögliche Einsatzgebiete für das neue Verfahren und die Vorrichtung lassen sich folgende Bereiche angeben, die aber noch erweitert werden können:

Es können Wirbel und Geschwindigkeitsfelder, Temperaturen, Wege usw. an offenen und auch an geschlossenen Windkanälen bestimmt werden. Wirbel und Geschwindigkeitsfelder können auch auf Flughäfen bestimmt werden, wobei hier das Transportmittel des Ultraschallimpulses ein Laserstrahl mittlerer Energie ist, der diese Information über weite Bereiche gebündelt übermitteln kann. Es können weiterhin Messungen an Triebwerken erfolgen, und zwar sowohl Geschwindigkeitsmessungen bis z. B. Ma = 1. Temperaturmessungen können durchgeführt werden, wobei die Auflösung und Genauigkeit von der Belegungsdichte der Laserstrahlen abhängt. Als Anwendungsgebiete ergibt sich die Vermessung von Triebwerken oder auch die Erkennung von Reibungswärme sowie aller sonstiger Strömungsprozesse, bei denen eine Umwandlung von Energie in Wärme erfolgt. Schließlich können auch Entfernungsmessungen bis auf ca. 0,1 mm bei einer Frequenz von 300 kHz durchgeführt werden. Die Frequenz kann noch erhöht werden. Solche Entfernungsmessungen sind zum Positionieren von Körpern und Modellen oder zur Überwachung und Registrierung des Schwingverhaltens bei aeroelastischen Untersuchungen wichtig.

Die im Zusammenhang mit der Erfindung auftretenden mathematisch physikalischen Bestimmungsgrößen und deren Zusammenhang ist folgender:

### a) Bestimmung von Primär-Laufzeiten

Wenn eine konstante Temperatur entlang eines Integrationsweges von A nach B angenommen werden kann, dann gilt bei

$$c + v = \frac{s}{t}$$

$s$ = $\overline{AB}$
$t$ = Laufzeit
$c$ = Schallgeschwindigkeit bei der Temperatur T
$v$ = Strömungsgeschwindigkeit in Schallausbreitungsrichtung
$s$ = Strecke zwischen A und B

Zur Bestimmung eines Wirbels wird der Nullpunkt in der freien Strömung bei der Temperatur T ohne Geschwindigkeitskomponenten in Schallausbreitungsrichtung ermittelt; diese Geschwindigkeit ist proportional der Laufzeit t. Bei Anwesenheit eines Wirbels wird die Strömungsgeschwindigkeitskomponente in Schallausbreitungsrichtung wirksam und es ergibt sich eine Schallaufzeit $t_1$. Dann ist

$$t - t_1 = t_w$$

direkt die Zeitverzögerung, die durch eine Geschwindigkeitskomponente des Wirbels in Schallausbreitungsrichtung hervorgerufen wird.

### b) Ermittlung der Temperatur

Bei Verwendung der Größen zur Bestimmung der Laufzeit t läßt sich bei einer Strömungskomponente mit der Ausbreitung von A nach B und gleicher Schallausbreitungsrichtung

$$c + v = \frac{s}{t_1}$$

angeben. Bei Strömungsrichtung A nach B jedoch entgegengesetzter Schallausbreitungsrichtung oder von B nach A gilt

$$c - v = \frac{s}{t_2}$$

Bildet man die Summe

$$c + v + c - v = \frac{s}{t_1} + \frac{s}{t_2},$$

$$c = \frac{s}{2}\left(\frac{1}{t_1} + \frac{1}{t_2}\right).$$

Da die Laufzeit $t_1$ und $t_2$ gemessen wurden, läßt sich die temperaturabhängige Schallgeschwindigkeit c berechnen. Dabei gilt:

$$c = 331{,}6 \cdot \sqrt{1 + \alpha T}$$

Der Schallausbreitungskoeffizient (temperaturabhängig)

$$\alpha_{Luft} = 0{,}003674 \cdot \frac{1}{{}^{\circ}C}, \text{ wobei}$$

$$T = \text{Temperatur in } {}^{\circ}C \text{ und}$$

$$331{,}6\,\frac{m}{s} = \text{Schallgeschwindigkeit bei } {}^{\circ}C$$

Damit ist die mittlere Temperatur zwischen A und B gegeben. Macht man die Strecke $\overline{AB}$ sehr klein, so lassen sich Temperaturen in sehr engen Bereichen bestimmen.

Anhand der Zeichnungen wird das Verfahren und die Vorrichtung weiter verdeutlicht und beschrieben. Es zeigt

Fig. 1 eine schematische Darstellung mit nur einem Sender zur Erläuterung des Prinzips des Verfahrens,

Fig. 2 eine schematische Darstellung der Vorrichtung in prinzipieller Ausbildungsmöglichkeit und

Fig. 3 die Vorrichtung in einer Anordnungsmöglichkeit für eindimensionale Messungen.

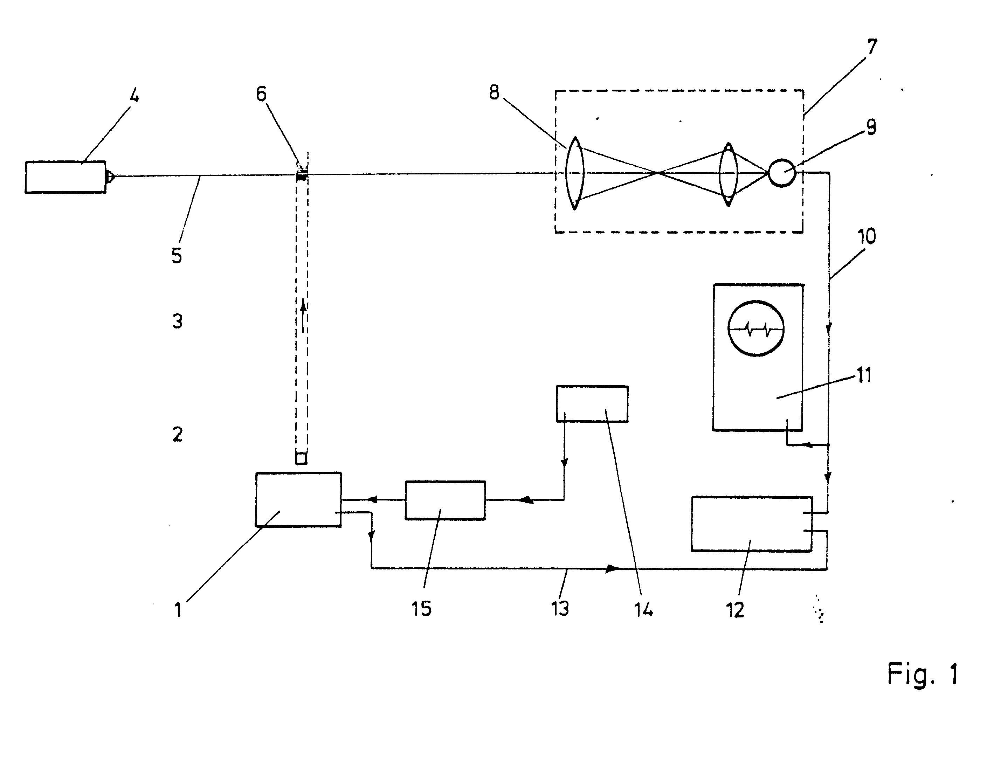

In Fig. 1 ist zur Verdeutlichung des Prinzips ein Ultraschallgenerator (1) mit einem Ultraschallsender (2) dargestellt, der kurze jeweils voneinander unterbrochenen Ultraschallimpulse (3) gemäß dem angegebenen Pfeil aussendet. Es ist auch möglich, kontinuierliche Ultraschallimpulsaussendungen zu benutzen. Der Ultraschallimpuls (3) stellt eine Kompressions- oder Dichtewelle dar, die das strömende Medium, welches in beliebiger Richtung hierzu strömt, durchwandert.

Ein Laser (4) sendet einen Laserstrahl (5) aus und ist so angeordnet, daß sich der Laserstrahl (5) und der Ultraschallimpuls (3) kreuzen. Der Abstand zwischen zwei Kreuzungspunkten stellt einen Meßpunkt oder eine Meßstrecke dar. In dem vorgegebenen Ort (6) als Kreuzungspunkt verändert der Ultraschallimpuls (3) den Laserstrahl (5) derart, daß dieser eine Modulation aufgeprägt erhält. Der Laserstrahl (5) kann über relativ weite Strecken ohne große Strahlaufweitung betrieben werden, und ohne daß die Modulation verlorengeht oder unkenntlich wird. In Zuordnung zu dem Laserstrahl (5) ist eine Aufnahmeeinheit (7) angeordnet, die aus einer Schlierenoptik (8) und einem nachgeschalteten Fototransistor (9) bestehen kann. Anstelle der Schlierenoptik (8) und des Fototransistors (9) kann auch ein Diodenarray angeordnet werden. Eine Signalleitung (10) führt von dem Fototransistor zum Oszillographen, auf dem die Signale zur späteren Auswertung sichtbar gemacht werden. Gleichzeitig führt die Signalleitung (10) zu einer Digitalspeichereinheit (12), in der alle jemals ausgestrahlten Ultraschallimpulse (3) erkannt durch ihre Signale auf dem Laserstrahl (5) eingespeichert werden. Vom Ultraschallgenerator (1) führt eine Rückleitung (13) zu der Digitalspeichereinheit (12). Damit wird sichergestellt, daß beim erneuten Aussenden eines Impulses die Digitalspeichereinheit in Bereitschaft zur Aufnahme steht.

Dem Ultraschallgenerator (1) ist ein Zeitgenerator (14) und ein Trigger (15) vorgeschaltet, die den Anfangspunkt des ausgestrahlten Ultraschallimpulses (3) genau definieren.

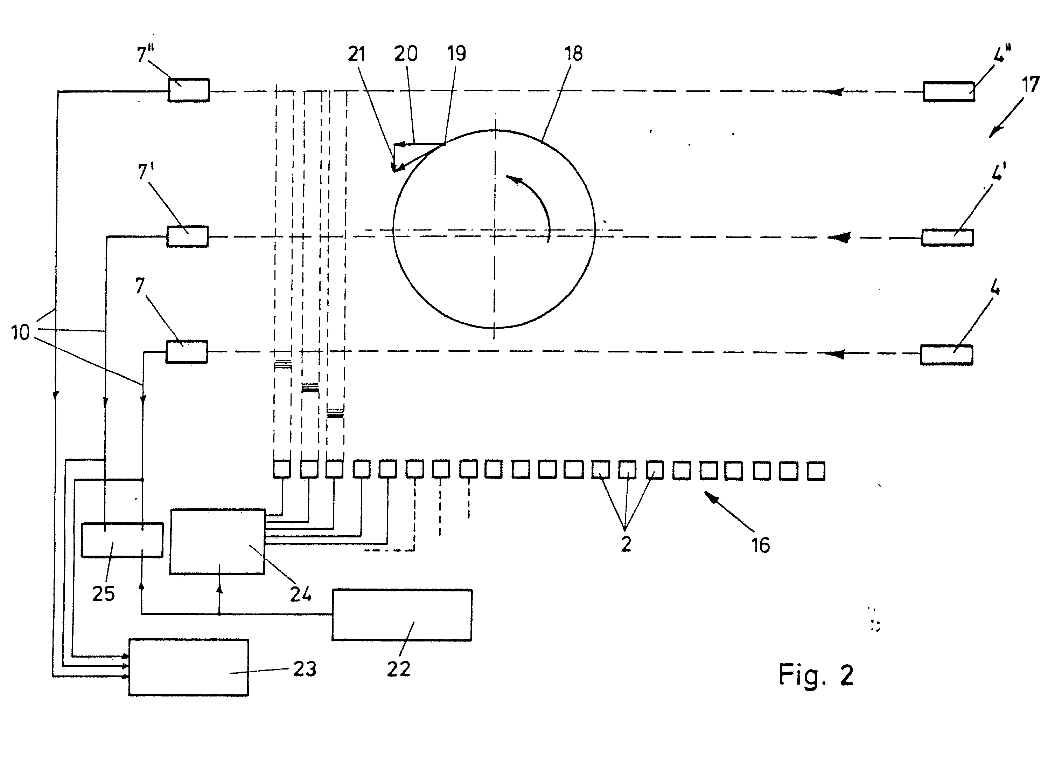

Fig. 2 zeigt eine schematische Darstellung, bei der das Prinzip schon etwas erweitert und anlageähnlicher verdeutlicht ist. Es ist hier eine Zeile (16) aus einer Vielzahl von Ultraschallsendern (2) angeordnet, die beispielsweise nebeneinander gleichabständig oder etwa gleichabständig angeordnet sind. Winklig dazu, insbesondere im rechten Winkel, ist eine Zeile (17) aus Lasern (4) angeordnet, die zur Unterscheidung mit 4, 4', 4'' bezeichnet sind. Entsprechend sind hier die Aufnahmeeinheiten (7, 7', 7'') vorgesehen. Jeweils ein Laser (4) und eine Aufnahmeeinheit (7) bilden einen Empfänger (4, 7). Zu dem Empfänger kann auch noch der betreffende elektronische Teil der Registrier- und Auswerteeinheit gerechnet werden. An Fig. 2 soll erläutert werden, wie beliebig Integrationswege gewählt werden können, ohne daß eine apparative Störung der Strömung in dem jeweils vorliegenden Strömungsfeld, auch nicht im Randbereich, erfolgt. Werden z. B. die Empfangseinheiten (4, 7 und 4'', 7'') als Integrationsweg gewählt, dann erfolgt eine Integration über den gesamten Bereich, in welchem

5

sich ein Wirbel (18) befindet. An dem Wirbel (18) sind in dem Punkt (19) die beiden senkrecht aufeinander stehenden Geschwindigkeitskomponenten (20 und 21) dargestellt. Selbstverständlich besitzt der Wirbel an jeglichen anderen Punkten entsprechende Geschwindigkeitskomponenten. In der gezeigten Anordnung ist mit der Einrichtung nur die Geschwindigkeitskomponente (21) meßbar bzw. registrierbar. Für die Geschwindigkeitskomponente (20) muß eine weitere Anlage, im rechten Winkel dazu eingesetzt werden. Durch die Verwendung der Empfänger (4, 7 und 4'', 7'') wird das gesamte Feld einschließlich des Wirbels (18) abgetastet. Diese Abtastung kann sequentiell oder parallel erfolgen, d. h. die Ultraschallimpulse (3) werden nacheinander oder gleichzeitig zur Aussendung gebracht. Bei gleichzeitiger Aussendung muß ein codiertes Signal verwendet werden, d. h. die einzelnen Ultraschallimpulse (3) müssen so mit einem Code versehen werden, daß sie voneinander unterscheidbar sind und bleiben.

Wenn man dagegen die Empfangseinheiten (4', 7' und 4'', 7'') als Grenzen des Integratiosweges ansetzt, erhält man einen schmaleren Bereich, der abgetastet und gemessen wird, indem sich im dargestellten Beispiel zufällig nur etwa eine Hälfte des Wirbels (18) befindet. Dies wäre an sich sinnlos, zeigt aber die gegebenen Möglichkeiten auf, indem beispielsweise die Integrationswege sehr kurz gewählt werden können, um eine quasi örtliche Erfassung der Geschwindigkeitskomponenten, Temperatur usw. zu ermöglichen. Bei diesem in Fig. 2 gezeigten Ausführungsbeispiel ist auch die Auswerteeinheit, die den Ultraschallsendern (2) und den Empfängern (4, 7, 4', 7', usw.) nachgeschaltet ist, schon komplizierter ausgebildet. Es findet ein Rechner (22) und ein Zähler (25) Anwendung. Der Kanalwähler (24) steuert die einzelnen Ultraschallsender (2) sequentiell an und veranlaßt damit die Aussendung der Ultraschallimpulse nacheinander. Der Transientenrecoder (23) zeichnet die empfangenen Impulse, die mit den jeweiligen Empfangseinheiten (4, 7, 4', 7', 4'', 7'' usw.) empfangen werden auf. Mit Hilfe des Rechners (22) ist es möglich, jeweils zu erkennen, welcher Empfänger (4, 7) mit welchem Ultraschallsender (2) betrieben worden ist.

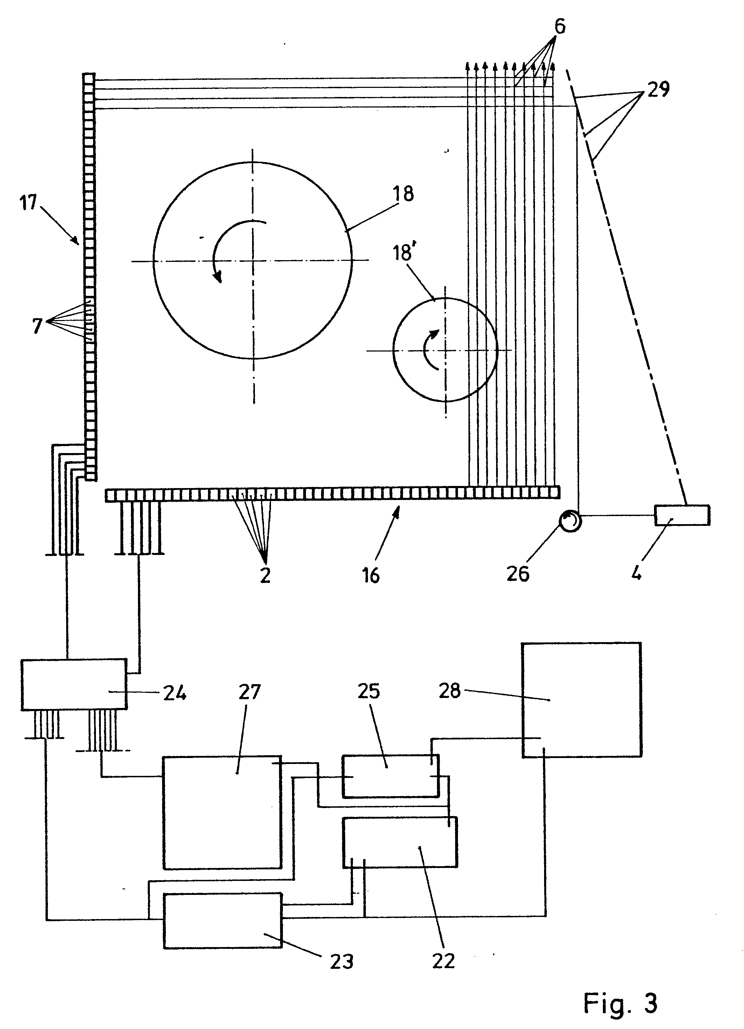

Gemäß Fig. 3 ist auch hier wieder die Zeile (16) der Ultraschallsender (2) vorgesehen. Die Empfänger (7) sind auch hier in Form einer Zeile (17) angeordnet. Es findet nur ein einziger Laser (4) in Verbindung mit einem Drehspiegel (26) und einer Spiegelreihe (29) Verwendung, so daß der Laserstrahl quasi gleichzeitig in viele einzelne Strahlen aufgespalten wird, die den einzelnen Aufnahmeeinheiten (7) zugeordnet sind. Es ergibt sich hier an jedem Kreuzungspunkt eine Vielzahl von vorgegebenen Orten (6) als Meßpunkte, die sich über das gesamte Strömungsfeld erstrecken und dieses punktförmig abdecken und erfassen. In diesem Falle mögen in dem Strömungsfeld zwei Wirbel (18 und 18') vorhanden sein, die sich auf diese Weise separat erfassen lassen.

Die nachgeschaltete Auswerteeinheit ist hier etwas aufwendiger aufgebaut, und zwar mit einer Codierung der einzelnen Ultraschallimpulse, die eine gleichzeitige Abstrahlung aller Sender ermöglichen. Neben den in Fig. 2 bereits dargestellten Geräten ist hier noch ein Ultraschallsendegenerator (27) mit verschiedener Signalcodierung sowie ein Großdatenspeicher (28) vorgesehen, die in der dargestellten Weise miteinander verbunden sind. Der Rechner (22) steuert den Transientenrecoder (23) an und macht diesen bereit zur Aufnahme. Gleichzeitig werden die codierten Ultraschallimpulse über den Ultraschallsendegenerator (27) und die einzelnen Ultraschallsender (2) ausgestrahlt. Der Kanalwähler (24) fragt gleichzeitig oder mit hoher Folgefrequenz die Aufnahmeeinheiten (7) der Zeile (17) ab. In dem Großdatenspeicher (28) werden die einzelnen Laufzeitendifferenzen festgehalten und stehen für eine spätere Auswertung zur Verfügung.

Bezugszeichenliste:

| | | |
|---|---|---|
| 1 | = | Ultraschallgenerator |
| 2 | = | Ultraschallsender |
| 3 | = | Ultraschallimpuls |
| 4 | = | Laser |
| 5 | = | Laserstrahl |
| 6 | = | Ort |
| 7 | = | Aufnahmeeinheit |
| 8 | = | Schlierenoptik |
| 9 | = | Fototransistor |
| 10 | = | Signalleitung |
| 11 | = | Oszillograph |
| 12 | = | Digitalspeichereinheit |
| 13 | = | Rückleitung |
| 14 | = | Zeitgenerator |
| 15 | = | Trigger |
| 16 | = | Zeile |
| 17 | = | Zeile |
| 18 | = | Wirbel |
| 19 | = | Punkt |

20 = Geschwindigkeitskomponente
21 = Geschwindigkeitskomponente
22 = Rechner
23 = Transientenrecorder
24 = Kanalwähler
25 = Zähler
26 = Drehspiegel
27 = Ultraschallsendegenerator
28 = Großdatenspeicher
29 = Spiegelreihe

## Patentansprüche

1. Verfahren zur Bestimmung von Kenngrößen eines Strömungsfeldes durch Messung der Laufzeit von Ultraschallimpulsen (3), insbesondere zur Bestimmung von Geschwindigkeitskomponenten in strömenden gasförmigen Medien, bei dem mindestens ein Ultraschallimpuls (3) durch das Strömungsfeld geschickt und die Laufzeit zu einem oder mehreren vorgegebenen Orten (6) des Strömungsfeldes durch Detektieren der Ankunft des Impulses an dem oder den vorgegebenen Orten (6) ermittelt wird, dadurch gekennzeichnet, daß zum Detektieren der Ankunft des Ultraschallimpulses (3) an dem jeweils betrachteten Ort (6) jeweils ein Laserstrahl (5) derart durch das Strömungsfeld gerichtet wird, daß er den Weg des Ultraschallimpulses (3) an dem betreffenden Ort (6) unter einem Winkel zur Ausbreitungsrichtung des Ultraschallimpulses (3) schneidet, und daß die beim Kreuzen des Laserstrahls (5) durch den Ultraschallimpuls (3) bewirkte Modulation des Laserstrahles (5) erfaßt wird.

2. Verfahren nach Anspruch 1, dadurch gekennzeichnet, daß sowohl die Aussendung des Ultraschallimpulses (3) als auch die Registrierung der Modulation jeweils entlang einer Vielzahl von parallelen zeilenförmigen Wegen erfolgen, und so eine Vielzahl von vorgegebenen Orten (6) als Kreuzungspunkte zwischen den Ultraschallimpulsen (3) und den Laserstrahlen (5) gebildet und die jeweiligen Informationen registriert werden.

3. Verfahren nach Anspruch 1 oder 2, dadurch gekennzeichnet, daß kurze Ultraschallimpulse (3) von ca. 10 μsec bis 1 μsec ausgesandt werden, die als Kompressions- oder Dichtewelle die Laserstrahlen (5) durchlaufen, wodurch der Laserstrahl abgelenkt und die Auslenkung des Laserstrahls erfaßt wird.

4. Verfahren nach Anspruch 1 bis 3, dadurch gekennzeichnet, daß der modulierte Laserstrahl (5) zunächst aus dem zu messenden Strömungsfeld herausgeführt und erst außerhalb des Strömungsfeldes registriert wird.

5. Verfahren nach Anspruch 1 bis 4, dadurch gekennzeichnet, daß bei Verwendung mehrerer Laserstrahlen (5) durch Auswahl bestimmter Laserstrahlen Meßstrecken beliebiger Länge ausgewählt werden, so daß das Strömungsfeld selbst ohne Störeinfluß im Randbereich untersucht wird.

6. Verfahren nach Anspruch 1 bis 5, dadurch gekennzeichnet, daß zur örtlichen Temperaturermittlung Ultraschallimpulse (3) aus einander entgegengesetzten Richtungen auf die gleichen Laserstrahlen (5) geschickt werden.

7. Vorrichtung zur Bestimmung von Kenngrößen eines Strömungsfeldes durch Messung der Laufzeit von Ultraschallimpulsen (3), insbesondere zur Bestimmung von Geschwindigkeitskomponenten in strömenden gasförmigen Medien, mit mindestens einem einen oder mehrere Impulse erzeugenden Ultraschallsender (2) und mindestens einem Empfänger (4, 5, 7) für die Impulse, dadurch gekennzeichnet, daß als Empfänger (4, 5, 7) ein einen Laserstrahl (5) aussendender Laser (4) und eine eine Modulation des Laserstrahles (5) registrierende Aufnahmeeinheit (7) vorgesehen sind, und daß der Empfänger (4, 5, 7) und der Ultraschallimpuls (2) so angeordnet sind, daß sich der Ultraschallimpuls (3) und der Laserstrahl (5) in einem vorgegebenen Ort (6) kreuzen.

8. Vorrichtung nach Anspruch 7, dadurch gekennzeichnet, daß sowohl eine Vielzahl von Ultraschallsendern (2) als auch eine Vielzahl von Empfängern (4, 5, 7), bestehend aus Laserstrahlen (5) und Aufnahmeeinheiten (7), zeilenweise winklig zueinander angeordnet sind.

9. Vorrichtung nach Anspruch 7 oder 8, dadurch gekennzeichnet, daß jede Aufnahmeeinheit (7) aus einer Schlierenempfangsoptik (8) mit nachgeschaltetem Fototransistor (9) oder aus einem Diodenarray besteht.

10. Vorrichtung nach Anspruch 7 bis 9, dadurch gekennzeichnet, daß zur Bestimmung von Geschwindigkeitskomponenten in den drei Raumrichtungen Sender (2) und Empfänger (4, 5, 7) jeweils in zwei Ebenen zueinander angeordnet sind.

## Claims

1. Method for the determination of characteristic magnitudes of a flow field through measurement of the transit time of ultrasonic pulses (3), particularly for the determination of velocity components in flowing gaseous media, in which at least one ultrasonic pulse (3) is sent through the flow field and the transit time to one or more predetermined locations (6) of the flow field is determined through detection of the arrival of the pulse at the predetermined location of locations (6), characterised thereby, that for the detection of the arrival of the ultrasonic pulse (3) at the location (6) respectively considered, a respective laser beam (5) is directed in such a manner through the flow field that it intersects the path of the ultrasonic pulse (3) at the location (6) concerned at an angle to the direction of propagation of the ultrasonic pulse (3) and that the modulation, which is caused on the crossing of the laser beam (5) by the ultrasonic pulse (3), of the laser beam (5) is detected.

2. Method according to claim 1, characterised thereby, that the emission of the ultrasonic pulse (3) as well as also the recording of the modulation each time take place along a plurality of rectilinear paths and thus a plurality of locations (6) is formed as crossing points between the ultrasonic pulses (3) and the laser beams (5) and the respective information data are recorded.

3. Method according to claim 1 or 2, characterised thereby, that short ultrasonic pulses (3) of about 10 microseconds to 1 microsecond are emitted and pass as compression wave or density wave through the laser beams (5), whereby the laser beam is deflected and the deflection of the laser beam is detected.

4. Method according to claim 1 to 3, characterised thereby, that the modulated laser beam (5) is first led out of the flow field to be measured and recorded only outside the flow field.

5. Method according to claim 1 to 4, characterised thereby, that on the use of several laser beams (5), measuring paths of desired length are selected through selection of certain laser beams so that the flow field itself is examined without disturbing influence in the edge region.

6. Method according to claim 1 to 5, characterised thereby, that for the local determination of temperature, ultrasonic pulses (3) are sent from mutually opposite directions onto the same laser beams (5).

7. Device, for the determination of characteristic magnitudes of a flow field through measurement of the transit time of ultrasonic pulses (3), particularly for the determination of velocity components in flowing gaseous media, with at least one ultrasonic transmitter (2) generating one or more pulses and at least one receiver (4, 5, 7) for the pulses, characterised thereby, that a laser (4) emitting a laser beam (5) and a recording unit (7) recording a modulation of the laser beam (5) are present as receiver (4, 5, 7) and that the receiver (4, 5, 7) and the ultrasonic transmitter (2) are so arranged that the ultrasonic pulse (3) and the laser beam (5) cross in a predetermined location (6).

8. Device according to claim 7, characterised thereby, that a plurality of ultrasonic transmitters (2) as well as also a plurality of receivers (4, 5, 7), consisting of laser beams (5) and recording units (7), are arranged in lines one at an angle to the other.

9. Device according to claim 7 or 8, characterised thereby, that each recording unit (7) consists of a schlieren receiving system (8) with a photo-transistor (9) connected therebehind or of a diode array.

10. Device according to claim 7 to 9, characterised thereby, that for the determination of velocity components in the three spatial directions, transmitters (2) and receivers (4, 5, 7) are each time arranged in two planes one relative to the other.

## Revendications

1. Procédé pour la mesure des différences du temps de transit d'impulsions ultrasonnores (3) pour la détermination de champs d'écoulement, spécialement pour la détermination de composantes de vitesses dans des fluides gazeux mobiles, dans lequel au moins une impulsion ultrasonore (3) est envoyée à travers le champ d'écoulement et le temps de transit est obtenu en un ou plusieurs endroits (6), déterminés à l'avance du champ d'écoulement par détection de l'arrivée de l'impulsion à l'endroit ou aux endroits déterminés à l'avance (6), caractérisé en ce que, pour la détection de l'arrivée de l'impulsion ultrasonore (3) à l'endroit (6) chaque fois considéré, un rayon laser (5) est dirigé chaque fois à travers le champ d'écoulement, de manière qu'il coupe le trajet de l'impulsion ultrasonore (3) à l'endroit considéré (6), sous un angle par rapport à la direction de propagation de l'impulsion ultrasonore (3) et que la modulation du rayon laser (5), provoquée au croisement de ce rayon (5) par l'impulsion ultrasonore (3), soit saisie.

2. Procédé suivant la revendication 1, caractérisé en ce qu'aussi bien l'émission de l'impulsion ultrasonore (3) que l'enregistrement de la modulation se produisent chaque fois le long d'un grand nombre de trajets parallèles linéaires, qu'il se forme ainsi un grand nombre d'endroit (6) déterminés à l'avance et constituant des croisements entre les impulsions ultrasonores (3) et les rayons lasers (5), qu'enfin les informations correspondantes sont enregistrées.

3. Procédé suivant la revendication 1 ou 2, caractérisé en ce que qu'on émet de courtes impulsions ultrasonores (3) d'environ 10 millisecondes à 1 milliseconde, qui traversent les rayons lasers (5) sous forme d'ondes de compression ou de densité, de sorte que le rayon laser est dévié et que sa déviation est saisie.

4. Procédé suivant les revendications 1 à 3, caractérisé en ce que le rayon laser (5) modulé est d'abord sorti du champ d'écoulement à mesurer et enregistré une fois qu'il est en dehors de ce champ.

5. Procédé suivant les revendications 1 à 4, caractérisé en ce que, dans le cas d'une utilisation de plusieurs rayons lasers (5), grâce au choix de rayons lasers déterminés on choisit des tronçons de mesure de n'importe quelle longueur voulue, de sorte que le champ d'écoulement est étudié sans dérangement, même dans la zone marginale.

6. Procédé suivant les revendications 1 à 5, caractérisé en ce que, pour la détermination locale de la température, des impulsions ultrasonores (3) provenant de directions opposées entre elles sont envoyées sur les mêmes rayons lasers (5).

7. Procédé pour la mesure des différences du temps de transit d'impulsions ultrasonores (3) pour la détermination de champs d'écoulement, spécialement pour la détermination de composantes de vitesses dans des fluides gazeux, comportant au moins un émetteur d'ultrasons (2) produisant une ou plusieurs impulsions et au moins un récepteur (4, 5, 7) pour les impulsions, caractérisé en ce qu'on prévoit, comme récepteur (4, 5, 7), un laser (4) émettant un rayon laser (5) et une unité réceptrice (7) enregistrant une modulation du rayon laser (5) et que le récepteur (4, 5, 7) et l'émetteur d'ultrasons (2) sont placés de manière que l'impulsion ultrasonore (3) et le rayon laser (5) se croisent à un endroit (6) détérminé à l'avance.

8. Dispositif suivant la revendication 7, caractérisé en ce qu'aussi bien un grand nombre d'émetteurs d'ultrasons (2) qu'un grand nombre de récepteur (4, 5, 7), constitués par des rayons lasers (5) et des unités réceptrices (7), sont placés en rangées formant un angle entre elles.

9. Dispositif suivant la revendication 7 ou 8, caractérisé en ce que chaque unité réceptrice (7) est composée d'un système optique récepteur strioscopique (8), comportant un phototransistor (9) monté à sa suite, ou d'un système de diodes.

10. Dispositif suivant les revendications 7 à 9, caractérisé en ce que, pour la détermination de composantes de vitesses dans les trois dimensions de l'espace, des émetteurs (2) et des récepteurs (4, 5, 7) sont placés chaque fois dans deux plans les uns par rapport aux autres.

Fig. 1

Fig. 2

Fig. 3